# EUROPÄISCHE PATENTSCHRIFT

(11) **EP 3 994 294 B1**
(45) Veröffentlichungstag und Bekanntmachung des Hinweises auf die Patenterteilung: **23.10.2024**
(21) Anmeldenummer: 20739245.7
(22) Anmeldetag: 02.07.2020
(51) Int. Cl.: C25B 1/042, C25B 1/23, C25B 15/02, C25B 15/08, F04F 5/16, F04F 5/48

(54) **SOEC-SYSTEM UND VERFAHREN ZUM BETREIBEN EINES SOEC-SYSTEMS**
SOEC SYSTEM AND METHOD FOR OPERATING A SOEC SYSTEM
SYSTÈME SOEC ET PROCÉDÉ DE FONCTIONNEMENT D'UN SYSTÈME SOEC

(30) Priorität: 02.07.2019 AT 505992019
(43) Veröffentlichungstag der Anmeldung: 11.05.2022
(73) Patentinhaber: AVL List GmbH, 8020 Graz (AT)
(72) Erfinder: REICHHOLF, David, 8010 Graz (AT); BUCHGRABER, Rene, 8200 Gleisdorf (AT); KOBERG, Franz, 8200 Graz (AT)
(74) Vertreter: Gamper, Bettina
(86) Internationale Anmeldenummer: PCT/AT2020/060260
(87) Internationale Veröffentlichungsnummer: WO 2021/000003

(56) Entgegenhaltungen:
- WO-A1-2015/040270
- DE-A1- 102007 004 590
- DE-A1- 102013 223 903
- JP-A- 2011 179 333
- US-A1- 2009 155 092

## Beschreibung

Die vorliegende Erfindung betrifft ein SOEC-System, aufweisend einen Brennstoffzellenstapel mit einer Gasseite und einer Luftseite, und einen Ejektor zum Zuführen eines Prozessfluids zu einem Gaseinlass an der Gasseite, wobei der Ejektor einen Primäreingang, zum Einleiten eines wasserhaltigen Primär-Prozessfluids durch eine Primärleitung des SOEC-Systems in einen Primärabschnitt des Ejektors, und einen Sekundäreingang, zum Einleiten von rückgeführtem Sekundär-Prozessfluid durch eine Rezirkulationsleitung des SOEC-Systems von einem Gasauslass an der Gasseite in einen Sekundärabschnitt des Ejektors, aufweist. Zudem betrifft die Erfindung ein Verfahren zum Betreiben eines solchen SOEC-Systems.

SOEC-Systeme, deren Kernkomponente ein Brennstoffzellenstapel ist, müssen für sinnvolle Funktions- und/oder Betriebsweisen und gewünschte Lebensdauern in speziellen Betriebszuständen betrieben werden. Hierzu gehört insbesondere eine vordefinierte Zuleitung von Prozessgasen zum Brennstoffzellenstapel, also einem wasser- und/oder wasserdampfhaltigen Fluid zur Gasseite und Luft zur Luftseite. Beim Betrieb eines SOEC-Systems unterscheidet man, wie bei konventionellen Brennstoffzellensystemen, zwischen Kathoden- und Anodengasführung, oder anders ausgedrückt, zwischen Brennstoff- und Luftseite, wobei im Elektrolysebetrieb die Kathode der Brennstoffseite und die Anode der Luftseite entspricht. Bei der Hochtemperaturelektrolyse mit SOEC-Stacks erfolgt eine Gasführung auf der Brennstoffseite insbesondere mit Wasserdampf und Kohlendioxid. Auf der Luftseite wird in der Regel Luft zur Spülung des Anodengasraumes verwendet. Die Luft verlässt den Brennstoffzellenstapel während des Betriebs sauerstoffangereichert. Um eine Degradation der Zellen auf der Brennstoffseite, insbesondere eine Oxidation des Nickelkatalysators, möglichst zu unterbinden, muss auf der Brennstoffseite eine reduzierende Atmosphäre herrschen, welche zusätzlich in der Gaszuführung durch reduzierend wirkende Spezies wie Wasserstoff und Kohlenmonoxid sichergestellt werden soll.

In alleinstehenden Systemen ohne Prüfstandsinfrastruktur oder separatem Speicherbehälter mit reduzierend wirkenden Spezies, muss der Anteil der reduzierenden Atmosphäre direkt aus dem System selbst bereitgestellt werden. Dies stellt generell eine wesentliche Herausforderung bei der Entwicklung von SOEC-Systemen dar und kann durch eine interne Rezirkulation von heißen Abgasen aus dem Brennstoffzellenstapel auf der Brennstoffseite realisiert werden.

Eine Rezirkulation erfordert eine geeignete Verschaltung und ein Gerät, welches das Druckniveau des Abgasteiles, der rezirkuliert werden soll, anhebt. Dies wird bei modernen SOEC-Systemen durch einen Ejektor bewerkstelligt. Ein solches Bauteil ist eine statische Komponente, die auf die gewünschten Betriebspunkte des Systems im speziellen ausgelegt sein muss und ohne bewegliche Teile auskommt. Im Ejektor wird ein Sekundärstrom, welcher grundsätzlich dem rezirkulierten Produktgas von der Gasseite des Brennstoffzellenstapels entspricht, einem Primärstrom beigemischt. Der Primärstrom umfasst Medien, die dem Brennstoffzellenstapel seiner Funktionalität entsprechend zugeführt werden müssen, also beispielsweise Wasserdampf für die Elektrolyse.

Der Funktionsweise eines Ejektors entsprechend, muss der Primärstrom ein spezifisch erhöhtes Druckniveau aufweisen, wodurch der Primärstrom in der Ejektordüse eine hohe Geschwindigkeit erreicht und der ausströmende Strahl in einer Mischkammer des Ejektors einen Unterdruck erzeugt. Der Unterdruck führt dazu, dass der Sekundärstrom durch eine Sogwirkung mitgezogen und dem Primärstrom beigemengt wird. Durch die fixe Geometrie des Ejektors hängen die Sogwirkung, d. h., die Rezirkulationswirkung, sowie die gesamte Druckerhöhung vom jeweiligen Betriebszustand des SOEC-Systems ab. Da der Primärstrom mit dem Betriebszustand am Brennstoffzellenstapel direkt zusammenhängt bedeutet dies, dass in einem Betriebszustand mit maximaler Elektrolysetätigkeit ein maximaler Primärmassenstrom vorliegt. Darüber hinaus liegt damit bei einer fixen Düsengeometrie des Ejektors auch die schnellste Strahlgeschwindigkeit vor, was grundsätzlich zur größten Rezirkulationsrate und Druckerhöhung an einem Ejektorausgang führt. Bei Teillastbetriebszuständen und damit kleineren Primärmassenströmen sinken die Strahlgeschwindigkeit, die Rezirkulationsrate sowie die mögliche Druckerhöhung. Um überhaupt eine notwendige Druckerhöhung bei einer bestimmten Rezirkulationsrate zu erreichen, muss ein Mindestprimärmassenstrom vorliegen. D. h., dass die für den Systembetrieb notwendige Rezirkulation ab einem bestimmten Mindestteillastbetrieb funktioniert und die Rezirkulationsrate bei steigenden Lastpunkten Richtung Volllast immer größer wird.

Ein Problem bei der Verwendung von Ejektoren stellt die begrenzte Regelbarkeit dar. Die Bauteile eines Ejektors weisen grundsätzlich eine fixe Geometrie auf, womit die Charakteristiken für den Betrieb im SOEC-System festgelegt sind. Grundsätzlich werden Ejektoren auf den Hauptbetriebspunkt ausgelegt und möglichst in diesem Betriebspunkt betrieben. Bezogen auf den Teillastbereich wünscht man sich einen möglichst großen Spielraum, in dem ein sicherer Betrieb ermöglicht werden kann.

In der internationalen Patentanmeldung WO 2015/040270 A1 wird ein reversibel betreibbares SOFC/SOEC-System beschrieben, bei welchem stromaufwärts eines Reformers ein gattungsgemäßer Ejektor angeordnet ist. Außerdem werden Mittel zum Zuführen eines zusätzlichen Fluides in den Primärstrom, um eine Fluidzusammensetzung und/oder einen Druck im Ejektor zu regeln, beschrieben. Dies verbessert zwar die Regelbarkeit am Ejektor, genügt jedoch noch nicht den gewünschten Anforderungen.

Aufgabe der vorliegenden Erfindung ist es, der voranstehend beschriebenen Problematik zumindest teilweise Rechnung zu tragen. Insbesondere ist es Aufgabe der Erfindung, ein SOEC-System sowie ein Verfahren zum Betreiben eines SOEC-Systems zu schaffen, welche zur Verbesserung der Regelbarkeit eines Ejektors im SOEC-System beitragen.

Die voranstehende Aufgabe wird durch die Patentansprüche gelöst. Insbesondere wird die voranstehende Aufgabe durch das SOEC-System gemäß Anspruch 1 sowie das Verfahren gemäß Anspruch 9 gelöst. Weitere Vorteile der Erfindung ergeben sich aus den Unteransprüchen, der Beschreibung und den Zeichnungen. Dabei gelten Merkmale und Details, die im Zusammenhang mit dem SOEC-System beschrieben sind, selbstverständlich auch im Zusammenhang mit dem erfindungsgemäßen Verfahren und jeweils umgekehrt, sodass bezüglich der Offenbarung zu den einzelnen Erfindungsaspekten stets wechselseitig Bezug genommen wird oder werden kann.

Gemäß einem ersten Aspekt der vorliegenden Erfindung wird ein SOEC-System vorgeschlagen. Das SOEC-System weist einen Brennstoffzellenstapel mit einer Gasseite und einer Luftseite, und einen Ejektor zum Zuführen eines Prozessfluids zu einem Gaseinlass an der Gasseite, auf. Der Ejektor weist einen Primäreingang, zum Einleiten eines wasserhaltigen Primär-Prozessfluids durch eine Primärleitung des SOEC-Systems in einen Primärabschnitt des Ejektors, und einen Sekundäreingang, zum Einleiten von rückgeführtem Sekundär-Prozessfluid durch eine Rezirkulationsleitung des SOEC-Systems von einem Gasauslass an der Gasseite in einen Sekundärabschnitt des Ejektors, auf. Das SOEC-System weist ferner einen Kontrollgaszuführabschnitt zum Zuführen von Kontrollgas in den Primärabschnitt und in den Sekundärabschnitt zur Kontrolle eines Drucks und/oder eines Massenstroms im Primärabschnitt und im Sekundärabschnitt auf, wobei der Kontrollgaszuführabschnitt zur Kontrolle des Drucks und/oder des Massenstroms im Primärabschnitt und im Sekundärabschnitt eine Ventilanordnung aufweist.

Das beschriebene SOEC-System stellt eine Lösung für die Aufgabe zur verbesserten Regelbarkeit des Ejektors sowie des Sekundär-Prozessfluids in der Rezirkulationsleitung dar. Die Erfindung betrifft die Art der Einbringung des Kontrollgases, welches sowohl auf der Primärseite des Ejektors dem wasserhaltigen Primär-Prozessfluid, als auch auf der Sekundärseite des Ejektors dem Rezirkulationsstrom beigemengt werden kann. Unter einer Beimengung auf der Primärseite kann eine Beimengung am, im und/oder stromaufwärts zum Primärabschnitt des Ejektors verstanden werden. Unter einer Beimengung auf der Sekundärseite des Ejektors kann eine Beimengung am, im und/oder stromaufwärts zum Sekundärabschnitt des Ejektors verstanden werden.

Die Beimengung in den Primärabschnitt erhöht den Massen- und Volumenstrom im Primärabschnitt. Dies führt zu einem entsprechend hohen Vordruck in einer Düse des Ejektors sowie einer größeren Strahlgeschwindigkeit in der Düse. Wie oben beschrieben, erhöhen sich damit auch die Rezirkulationsrate und die mögliche Druckerhöhung. Die Einbringung des Kontrollgases in den Sekundärabschnitt verringert hingegen den Primärmassenstrom. Wenn das Kontrollgas dem Rezirkulationsstrom beigemengt wird, verringert sich der tatsächliche Rezirkulationsstrom, oder anders ausgedrückt, der Anteil an Produktgas im Rezirkulationsstrom verringert sich.

Durch den Kontrollgaszuführabschnitt kann die Menge an Kontrollgas stufenlos zwischen Primär- und Sekundärseite, d. h., zwischen Primärabschnitt und Sekundärabschnitt, verschoben werden. Für den Fall, dass das SOEC-System in Form eines Co-Elektrolyse-SOEC-Systems ausgestaltet ist, erhält man den größten Regelbereich, wenn die Ejektorgeometrie für den Durchfluss mit reinem Wasserdampf im maximalen Betriebspunkt ausgelegt ist, um eine gewünschte Rezirkulationsrate und Druckerhöhung zu erreichen. In einem entsprechenden Betriebszustand kann das Kontrollgas ausschließlich auf der Sekundärseite, d. h., in den Sekundärabschnitt, eingebracht werden. In Teillastbetriebszuständen, in welchen der Primär-Prozessfluidstrom, insbesondere in Form eines Wasserdampfmassenstroms, nicht mehr dem ausgelegten Ejektormassentrom entspricht, wird das Kontrollgas entsprechend dem Lastpunkt nicht mehr sekundärseitig, sondern primärseitig, also in den Primärabschnitt, eingebracht. Dies hat zur Folge, dass die Ejektorleistung im Teillastbetrieb weniger stark abfällt und der Betriebsbereich maßgeblich erweitert werden kann.

Unter dem Kontrollgas kann ein Gas zum Steuern und/oder Regeln des Drucks und/oder des Massenstroms im Primärabschnitt sowie im Sekundärabschnitt verstanden werden. Hierbei ist zu erwähnen, dass durch ein Steuern und/oder Regeln des Drucks und/oder des Massenstroms im Primärabschnitt automatisch auch der Druck und der Massenstrom im Sekundärabschnitt gesteuert und/oder geregelt werden können. Entsprechend können durch ein Steuern und/oder Regeln des Drucks und/oder des Massenstroms im Sekundärabschnitt automatisch auch der Druck und der Massenstrom im Primärabschnitt gesteuert und/oder geregelt werden.

Der Kontrollgaszuführabschnitt kann mehrere Leitungsabschnitte sowie mehrere darin und/oder daran angeordnete Steuer- und/oder Regelmittel aufweisen. Der Kontrollgaszuführabschnitt kann ferner Fluidfördermittel wie Pumpen und/oder Gebläse zum Fördern des Kontrollgases durch die verschiedenen Leitungsabschnitte umfassen.

Unter dem SOEC-System ist insbesondere ein Hochtemperatur-SOEC-Elektrolysesystem zu verstehen. Ferner kann unter dem SOEC-System auch ein reversibel betreibbares SOFC/SOEC-System verstanden werden. Das SOEC-System ist bevorzugt in Form eines Co-Elektrolyse-SOEC-Systems ausgestaltet, in welchem insbesondere und/oder überwiegend Kohlendioxid als Kontrollgas verwendet wird. Das wasserhaltige Primär-Prozessfluid kann Wasser und insbesondere Wasserdampf, welcher durch einen stromaufwärts des Ejektors anordenbaren Verdampfer erzeugbar ist, aufweisen. D. h., unter dem wasserhaltigen Primär-Prozessfluid kann ein wasser- und/oder wasserdampfhaltiges Primär-Prozessfluid verstanden werden. Das rückgeführte Sekundär-Prozessfluid kann als an der Gasseite erzeugtes Produktgas verstanden werden.

Unter dem Ejektor kann eine Strahlpumpe mit einer Treibdüse, einer Mischkammer und einem Diffusor verstanden werden. Die Treibdüse kann als Primärabschnitt oder zumindest als Teil des Primärabschnitts verstanden werden. Ein Bereich stromaufwärts der Mischkammer und stromabwärts des Sekundäreingangs kann als Sekundärabschnitt verstanden werden. Der Ejektor ist bevorzugt direkt stromaufwärts der Gasseite angeordnet, um von dort der Gasseite möglichst effektiv und effizient den Wasserdampf zuzuführen.

Das SOEC-System kann eine Betriebszustandserkennungsvorrichtung zum Erkennen eines aktuellen Betriebszustandes des SOEC-Systems aufweisen. Außerdem kann das SOEC-System einen Controller aufweisen, der mit der Betriebszustandserkennungsvorrichtung in Kommunikationsverbindung steht und zum Einstellen der Kontrollgaszufuhr in den Primärabschnitt und/oder in den Sekundärabschnitt abhängig vom erkannten Betriebszustand des SOEC-Systems konfiguriert ist. Damit kann der Ejektor im SOEC-System im Wesentlichen automatisch und/oder automatisiert geregelt werden. Die Betriebszustandserkennungsvorrichtung kann einen oder mehrere Temperatursensoren zum Erkennen von Betriebstemperaturen im SOEC-System, einen oder mehrere Drucksensoren zum Erkennen von Betriebsdrücken im SOEC-System, einen oder mehrere Massenflusserkennungsmittel zur Erkennung von Massenflüssen im SOEC-System, und/oder einen oder mehrere Stoffsensoren zum Erkennen von Stoffzusammensetzungen in Betriebsfluiden, wie dem Primär-Prozessfluid und/oder dem Sekundär-Prozessfluid, aufweisen.

Unter einem Prozessfluid ist ein Fluid zu verstehen, welches für den Betrieb des SOEC-Systems erforderlich ist. Vorliegend weist das Primär-Prozessfluid überwiegend Wasserdampf, und ergänzend Kohlendioxid auf. Das Prozessfluid stromabwärts des Ejektors umfasst insbesondere das Primär-Prozessfluid, das Sekundär-Prozessfluid und/oder das Kontrollgas. Unter der Kontrolle des Drucks und/oder des Massenstroms ist insbesondere die Kontrolle des Drucks und/oder des Massenstroms der jeweiligen Fluide im jeweiligen Funktionsabschnitt des SOEC-Systems zu verstehen. Die Ventilanordnung kann als Mittel zum Sperren und Freigeben von Fluidleitungsabschnitten im Kontrollgaszuführabschnitt verstanden werden.

Gemäß einer weiteren Ausführungsform der vorliegenden Erfindung ist es möglich, dass der Kontrollgaszuführabschnitt eine Primär-Kontrollgasleitung zum Leiten des Kontrollgases in den Primäreingang und/oder in die Primärleitung aufweist. Durch die Primär-Kontrollgasleitung lässt sich das Kontrollgas einfach und direkt an die gewünschte Position im Primärabschnitt des Ejektors führen. In die Primärleitung lässt sich das Kontrollgas stromaufwärts des Ejektors, bei Bedarf stromaufwärts weiterer Funktionsbauteile des SOEC-Systems, führen. So ist es beispielsweise möglich, dass bei einem erfindungsgemäßen SOEC-System stromaufwärts des Ejektors eine kalte Seite eines Wärmetauschers angeordnet ist, durch welche sich die Primärleitung erstreckt, wobei die Primär-Kontrollgasleitung stromaufwärts der kalten Seite in die Primärleitung führt. Damit kann das Kontrollgas vor dem Zuführen zum Ejektor aufgeheizt werden und zu einem verbesserten Wirkungsgrad im SOEC-System führen. Von der Rezirkulationsleitung führt vorzugsweise eine Abzweigleitung durch die heiße Seite des Wärmetauschers Damit kann heißes Produktgas zum Aufheizen des Kontrollgases genutzt werden. Die Effizienz des Gesamtsystems kann dadurch weiter verbessert werden.

Alternativ oder zusätzlich zu der Primär-Kontrollgasleitung kann der Kontrollgaszuführabschnitt in einem erfindungsgemäßen SOEC-System auch eine Sekundär-Kontrollgasleitung zum Leiten des Kontrollgases in den Sekundäreingang aufweisen. Durch die Sekundär-Kontrollgasleitung lässt sich das Kontrollgas einfach und direkt an die gewünschte Position im Sekundärabschnitt des Ejektors führen.

Von weiterem Vorteil ist es, wenn die Sekundär-Kontrollgasleitung bei einem erfindungsgemäßen SOEC-System zumindest abschnittsweise getrennt von der Rezirkulationsleitung ausgestaltet ist. D. h., die Sekundär-Kontrollgasleitung ist als dezidierte Kontrollgasleitung separat zur Rezirkulationsleitung ausgestaltet. Dadurch kann dem Ejektor unabhängig vom Rezirkulationsstrom Kontrollgas zugeführt werden. Die Regelbarkeit des Ejektors lässt sich damit entsprechend verbessern.

Darüber hinaus ist es bei einem SOEC-System gemäß der vorliegenden Erfindung möglich, dass die Primär-Kontrollgasleitung und die Sekundär-Kontrollgasleitung zumindest abschnittsweise getrennt voneinander ausgestaltet sind. D. h., die Primär-Kontrollgasleitung und die Sekundär-Kontrollgasleitung sind als dezidierte Kontrollgasleitungen ausgestaltet. Schaltungstechnisch vorteilhaft, da relativ einfach realisierbar, ist es, wenn sich die Primär-Kontrollgasleitung und die Sekundär-Kontrollgasleitung zumindest abschnittsweise parallel zueinander erstrecken. Bei einer vorteilhaften Schaltungsanordnung kann sich die Primär-Kontrollgasleitung von einer Haupt-Kontrollgasleitung, die sich von einer Kontrollgasquelle erstreckt, zum Primäreingang und/oder in die Primärleitung erstrecken. Die Sekundär-Kontrollgasleitung kann sich, von der Haupt-Kontrollgasleitung und getrennt von der Primär-Kontrollgasleitung zum Sekundäreingang erstrecken. Die Haupt-Kontrollgasleitung kann sich demnach in einem Gabelabschnitt in die Primär-Kontrollgasleitung und die Sekundär-Kontrollgasleitung verzweigen.

Für eine einfache und zuverlässige Steuerung und/oder Regelung des Kontrollgases zum Ejektor ist es bei einem erfindungsgemäßen SOEC-System möglich, dass die Ventilanordnung ein Primärventil in der Primär-Kontrollgasleitung und ein Sekundärventil in der Sekundär-Kontrollgasleitung aufweist. Durch die Ventile können die Primär-Kontrollgasleitung und die Sekundär-Kontrollgasleitung zum Erreichen der gewünschten Regelbarkeit des Ejektors, d. h., zur gewünschten Einbringung des Kontrollgases in den Primärabschnitt und/oder in den Sekundärabschnitt, gesperrt oder freigegeben werden. Die Ventile können demnach jeweils als Durchflussregler zum Regeln eines Kontrollgasdurchflusses verstanden werden.

Es ist auch möglich, dass die Steuerung und/oder Regelung durch eine reine Wasserelektrolyse erfolgt. Hierfür ist eine zweite Wasserleitung mit beispielsweise einer weiteren Pumpe für eine Druckerhöhung vorgesehen. Nach einer erfolgten Verdampfung des Wassers wird dieses in den Feedstrom als Primär-Prozessfluid oder Sekundär-Prozessfluid zugeführt, sodass das verdampfte Wasser als Kontrollgas verwendet wird. Dadurch ist eine einfache Regelung möglich. Es wird also Wasserdampf als Kontrollgas verwendet.

Außerdem ist es möglich, dass ein erfindungsgemäßes SOEC-System eine Kontrollgasquelle zum Bereitstellen des Kontrollgases in Form von Kohlendioxid aufweist. Die Kontrollgasquelle kann einen Kohlendioxidspeicher, beispielsweise in Form eines Kohlendioxidtanks, und/oder eine dezentrale Bezugsquelle für Kohlendioxid, beispielsweise in Form von rezirkuliertem Kohlendioxid aus anderen Prozessen während des Betriebs des SOEC-Systems, aufweisen. Die Verwendung von Kohlendioxid als Kontrollgas hat sich insbesondere in einem Co-Elektrolyse-SOEC-System als vorteilhaft herausgestellt. Hier wird das Kohlendioxid nämlich ohnehin am Brennstoffzellenstapel benötigt. Durch die Verwendung von Kohlendioxid als Kontrollgas kann sowohl der für den Co-Elektrolyse-Betrieb erforderlichen Einbringung des Kohlendioxids in den Feedstrom als Primär-Prozessfluid des Systems, als auch der gewünschten, verbesserten Regelbarkeit des Ejektors und der Fluidführung in der Rezirkulationsleitung Rechnung getragen werden. Kohlendioxid hat im Vergleich zu Wasserdampf bei einem gleichen thermodynamischen Zustand ein größeres tatsächliches Volumen. Die Erfindung betrifft hierbei die Art der Einbringung des Kohlendioxids, welches sowohl auf der Primärseite des Ejektors dem Wasserdampf als auch auf der Sekundärseite des Ejektors dem Rezirkulationsstrom beigemengt werden kann.

Gemäß einem weiteren Aspekt der vorliegenden Erfindung wird ein Verfahren zum Betreiben eines, wie vorstehend im Detail beschriebenen, SOEC-Systems zur Verfügung gestellt. Das Verfahren weist die folgenden Schritte auf:
- Erkennen eines aktuellen Betriebszustandes des SOEC-Systems durch eine Betriebszustandserkennungsvorrichtung, und
- Einstellen der Kontrollgaszufuhr in den Primärabschnitt und/oder in den Sekundärabschnitt abhängig vom erkannten Betriebszustand des SOEC-Systems durch einen Controller.

Damit bringt ein erfindungsgemäßes Verfahren die gleichen Vorteile mit sich, wie sie ausführlich mit Bezug auf das erfindungsgemäße SOEC-System beschrieben worden sind. Wie vorstehend bereits mit Bezug zum SOEC-System beschrieben, wird als Kontrollgas vorzugsweise Kohlendioxid oder ein kohlendioxidreiches Gas verwendet. Der Betriebszustand kann anhand wenigstens einer erkannten Temperatur, wenigstens eines erkannten Drucks, wenigstens einer erkannten Stoffzusammensetzung und/oder wenigstens eines erkannten und/oder ermittelten Massenstroms im SOEC-System erkannt oder ermittelt werden.

Bei einer erfindungsgemäßen Ausgestaltungsvariante der vorliegenden Erfindung ist es ferner möglich, dass bei Erkennen eines Teillastbetriebs des SOEC-Systems ein Kontrollgasmassenstrom zum Primärabschnitt erhöht wird und/oder ein Kontrollgasmassenstrom zum Sekundärabschnitt reduziert wird. D.h., abhängig von einem erkannten Betriebszustand des SOEC-Systems, vorliegend bei Erkennen eines Teillastbetriebs, werden die Eingangsgaszusammensetzungen am Ejektor, mit anderen Worten, die Feedströme oder die Primär- und Sekundär-Prozessfluide, festgelegt. Durch Verschieben des Kontrollgases, insbesondere in Form von Kohlendioxid, von der Sekundärseite auf die Primärseite kann die Ejektorleistung in der Teillast auf einfache Weise verbessert werden.

Weitere, die Erfindung verbessernde Maßnahmen ergeben sich aus der nachfolgenden Beschreibung zu verschiedenen Ausführungsbeispielen der Erfindung, welche in den Figuren schematisch dargestellt sind.

Es zeigen jeweils schematisch:
- Figur 1: ein Blockschaltbild eines SOEC-Systems gemäß einer bevorzugten Ausführungsform der vorliegenden Erfindung,
- Figur 2: eine Detailansicht eines Ejektors in einem erfindungsgemäßen SOEC-System, und
- Figur 3: ein Flussdiagramm zum Erläutern eines erfindungsgemäßen Verfahrens.

Elemente mit gleicher Funktion und Wirkungsweise sind in den Figuren jeweils mit denselben Bezugszeichen versehen.

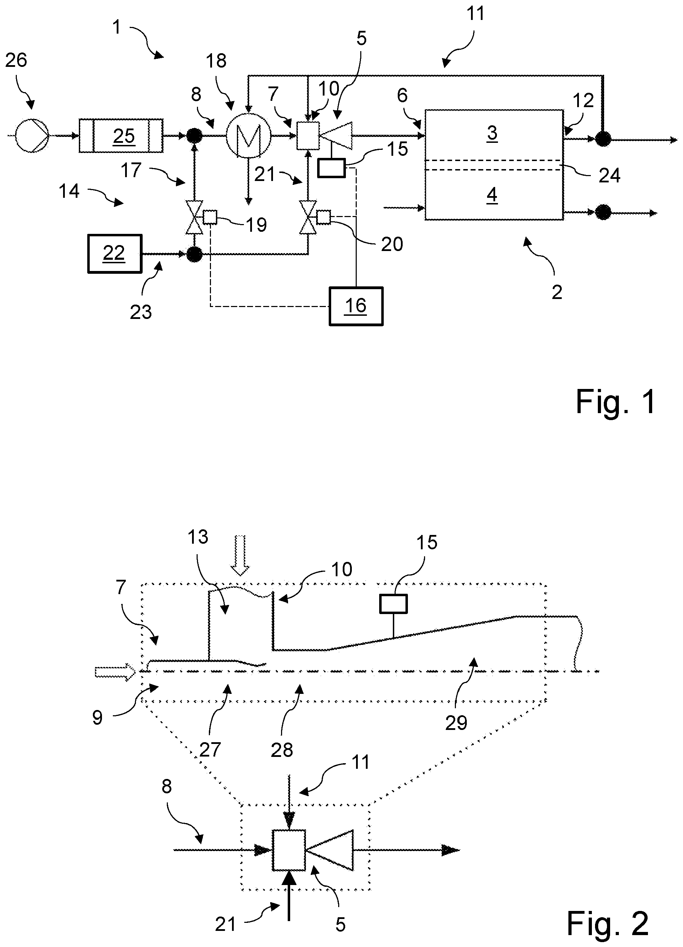

In Fig. 1 ist ein SOEC-System 1 gemäß einer bevorzugten Ausführungsform in Form eines Co-Elektrolyse-SOEC-Systems dargestellt. Das dargestellte SOEC-System 1 weist einen Brennstoffzellenstapel 2 mit einer Gasseite 3 und einer Luftseite 4 auf.

Zwischen der Gasseite 3 und der Luftseite 4 ist eine Elektrolytmembran 24 angeordnet. Außerdem weist das SOEC-System 1 einen Ejektor 5 zum Zuführen eines Prozessfluids zu einem Gaseinlass 6 an der Gasseite 3 auf. Der Ejektor 5 umfasst einen Primäreingang 7 zum Einleiten eines wasserhaltigen Primär-Prozessfluids durch eine Primärleitung 8 des SOEC-Systems 1 in einen Primärabschnitt 9 des Ejektors 5 und einen Sekundäreingang 10 zum Einleiten von rückgeführtem Sekundär-Prozessfluid durch eine Rezirkulationsleitung 11 des SOEC-Systems 1 von einem Gasauslass 12 an der Gasseite 3 in einen Sekundärabschnitt 13 des Ejektors 5.

Darüber hinaus weist das SOEC-System 1 einen Kontrollgaszuführabschnitt 14 zum Zuführen von Kontrollgas in den Primärabschnitt 9 und in den Sekundärabschnitt 13 zur Kontrolle eines Drucks und/oder eines Massenstroms im Primärabschnitt 9 und im Sekundärabschnitt 13 auf, wobei der Kontrollgaszuführabschnitt 14 zur Kontrolle des Drucks und/oder des Massenstroms im Primärabschnitt 9 und im Sekundärabschnitt 13 eine Ventilanordnung 19, 20 aufweist.

Genauer gesagt weist der Kontrollgaszuführabschnitt 14 eine Primär-Kontrollgasleitung 17 zum Leiten des Kontrollgases in die Primärleitung 8 auf. Alternativ oder zusätzlich könnte das Kontrollgas auch direkt in den Primärabschnitt 9 geleitet werden. Stromaufwärts des Ejektors 5 ist eine kalte Seite eines Wärmetauschers 18 angeordnet, durch welche sich die Primärleitung 8 erstreckt, wobei die Primär-Kontrollgasleitung 17 stromaufwärts der kalten Seite in die Primärleitung 8 führt. Durch die heiße Seite des Wärmetauschers 18 wird heißes Produktgas, d. h., das rezirkulierte Sekundär-Prozessfluid von der Gasseite 3 des Brennstoffzellenstapels 2 zum Aufheizen des Kontrollgases geführt.

Stromaufwärts der kalten Seite des Wärmetauschers 18 ist ein Verdampfer 25 zum Verdampfen von Wasser angeordnet. Stromaufwärts des Verdampfers 25 ist eine Pumpe 26 zum Fördern von Wasser zum Verdampfer 25 angeordnet.

Der Kontrollgaszuführabschnitt 14 weist ferner eine Sekundär-Kontrollgasleitung 21 zum Leiten des Kontrollgases in den Sekundäreingang 10 auf. Die Sekundär-Kontrollgasleitung 21 ist getrennt von der Rezirkulationsleitung 11 ausgestaltet. Außerdem sind die Primär-Kontrollgasleitung 17 und die Sekundär-Kontrollgasleitung 21 getrennt voneinander ausgestaltet.

Das dargestellte SOEC-System 1 weist zudem eine Kontrollgasquelle 22 zum Bereitstellen des Kontrollgases in Form von Kohlendioxid auf. Von der Kontrollgasquelle 22 erstreckt sich eine Haupt-Kontrollgasleitung 23, welche sich in einem Gabelabschnitt in die Primär-Kontrollgasleitung 17 und die Sekundär-Kontrollgasleitung 21 verzweigt. Die Primär-Kontrollgasleitung 17 und die Sekundär-Kontrollgasleitung 21 erstrecken sich anschließend bis hin zum Ejektor 5 parallel zueinander.

Die Ventilanordnung weist ein Primärventil 19 in der Primär-Kontrollgasleitung 17 und ein Sekundärventil 20 in der Sekundär-Kontrollgasleitung 21 auf, durch welche die Massenströme in der jeweiligen Kontrollgasleitung gesteuert und/oder geregelt werden können.

Am Ejektor 5 ist eine Betriebszustandserkennungsvorrichtung 15 zum Erkennen eines Betriebszustandes im SOEC-System 1 ausgestaltet. Die Betriebszustandserkennungsvorrichtung 15 weist eine Sensorik zur Erkennung eines aktuellen Massenstroms durch einen Diffusor 29 des Ejektors 5 anhand von Temperatur- und Druckwerten im Diffusor 29 auf. Die Betriebszustandserkennungsvorrichtung 15, das Primärventil 19 sowie das Sekundärventil 20 stehen mit einem Controller 16 zum Ansteuern des Primärventils 19 sowie des Sekundärventils 20 anhand eines erkannten Betriebszustandes in Signalverbindung. Gleichwohl kann der Controller 16 das Primärventil 19 sowie das Sekundärventil 20 auch anhand direkt mitgeteilter Betriebszustände, wie gewünscht, ansteuern. So kann dem Controller 16 beispielsweise von einem Nutzer und/oder einer digitalen Signaleinheit mitgeteilt werden, in welchem Betriebszustand, beispielsweise Teillast oder Volllast, sich das SOEC-System aktuell befindet oder zeitnah befinden soll.

In Fig. 2 ist der Ejektor 5 im Detail dargestellt. Wie gezeigt, weist der Ejektor 5 eine Düse 27, stromabwärts der Düse 27 eine Mischkammer 28 und stromabwärts der Mischkammer 28 einen Diffusor 29 auf. Im Bereich der Düse 27 sowie der Mischkammer 28 befinden sich am Ende der Primärleitung 8 der Primäreingang 7 sowie der Primärabschnitt 9. Am gezeigten Ejektor 5 liegen sowohl die Rezirkulationsleitung 11 als auch die Sekundär-Kontrollgasleitung 21 an. Diese münden, wie vergrößert dargestellt, beide im Sekundärabschnitt 13. Alternativ wäre es jedoch auch möglich, dass die Rezirkulationsleitung 11 und die Sekundär-Kontrollgasleitung 21 in verschiedenen, getrennt voneinander angeordneten Fluideinlassabschnitten am Ejektor 5 münden, wie im vereinfachten Schaltdiagramm der Fig. 1 angedeutet.

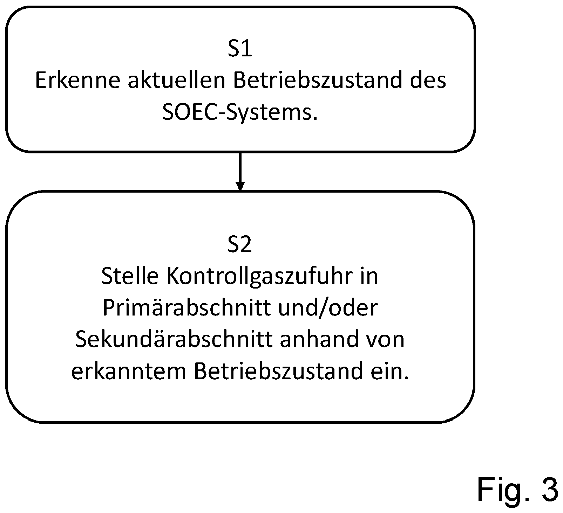

Fig. 3 zeigt ein Flussdiagramm zum Erläutern eines Verfahrens gemäß einer bevorzugten Ausführungsform. Hierzu wird in einem ersten Schritt S1 ein aktueller Betriebszustand des SOEC-Systems 1 durch die Betriebszustandserkennungsvorrichtung 15 erkannt. Dies kann anhand aktueller Betriebsparameter im SOEC-System 1 oder anhand von einem vorgegebenen oder gewünschten Betriebszustand geschehen. Anschließend wird in einem zweiten Schritt S2 die Kontrollgaszufuhr in den Primärabschnitt 9 und/oder in den Sekundärabschnitt 13 abhängig vom erkannten Betriebszustand des SOEC-Systems 1 durch den Controller 16 eingestellt. Bei Erkennen eines Teillastbetriebs des SOEC-Systems 1 werden ein Kontrollgasmassenstrom zum Primärabschnitt 9 erhöht und/oder ein Kontrollgasmassenstrom zum Sekundärabschnitt 13 reduziert.

Die Erfindung lässt neben den dargestellten Ausführungsformen weitere Gestaltungsgrundsätze innerhalb des durch den Gegenstand der Ansprüche definierten Umfangs zu. D. h., die Erfindung soll nicht auf die mit Bezug auf die Figuren erläuterten Ausführungsbeispiele beschränkt betrachtet werden.

### Bezugszeichenliste

- 1: SOEC-System
- 2: Brennstoffzellenstapel
- 3: Gasseite
- 4: Luftseite
- 5: Ejektor
- 6: Gaseinlass
- 7: Primäreingang
- 8: Primärleitung
- 9: Primärabschnitt
- 10: Sekundäreingang
- 11: Rezirkulationsleitung
- 12: Gasauslass
- 13: Sekundärabschnitt
- 14: Kontrollgaszuführabschnitt
- 15: Betriebszustandserkennungsvorrichtung
- 16: Controller
- 17: Primär-Kontrollgasleitung
- 18: Wärmetauscher
- 19: Primärventil
- 20: Sekundärventil
- 21: Sekundär-Kontrollgasleitung
- 22: Kontrollgasquelle
- 23: Haupt-Kontrollgasleitung
- 24: Elektrolytmembran
- 25: Verdampfer
- 26: Pumpe
- 27: Düse
- 28: Mischkammer
- 29: Diffusor

## Patentansprüche

1. SOEC-System (1), aufweisend einen Brennstoffzellenstapel (2) mit einer Gasseite (3) und einer Luftseite (4), wobei im Elektrolysebetrieb die Kathode der Gasseite und die Anode der Luftseite entspricht, und einen Ejektor (5) zum Zuführen eines Prozessfluids zu einem Gaseinlass (6) an der Gasseite (3), wobei der Ejektor (5) einen Primäreingang (7), zum Einleiten eines wasserhaltigen Primär-Prozessfluids durch eine Primärleitung (8) des SOEC-Systems (1) in einen Primärabschnitt (9) des Ejektors (5), und einen Sekundäreingang (10), zum Einleiten von rückgeführtem Sekundär-Prozessfluid durch eine Rezirkulationsleitung (11) des SOEC-Systems (1) von einem Gasauslass (12) an der Gasseite (3) in einen Sekundärabschnitt (13) des Ejektors (5), aufweist,
**gekennzeichnet durch**
einen Kontrollgaszuführabschnitt (14) zum Zuführen von Kontrollgas in den Primärabschnitt (9) und in den Sekundärabschnitt (13) zur Kontrolle eines Drucks und/oder eines Massenstroms im Primärabschnitt (9) und im Sekundärabschnitt (13), wobei der Kontrollgaszuführabschnitt (14) zur Kontrolle des Drucks und/oder des Massenstroms im Primärabschnitt (9) und im Sekundärabschnitt (13) eine Ventilanordnung (19, 20) aufweist.

2. SOEC-System (1) nach Anspruch 1,
**dadurch gekennzeichnet, dass**
der Kontrollgaszuführabschnitt (14) eine Primär-Kontrollgasleitung (17) zum Leiten des Kontrollgases in den Primäreingang (7) und/oder in die Primärleitung (8) aufweist.

3. SOEC-System (1) nach Anspruch 2,
**dadurch gekennzeichnet, dass**
stromaufwärts des Ejektors (5) eine kalte Seite eines Wärmetauschers (18) angeordnet ist, durch welche sich die Primärleitung (8) erstreckt, wobei die Primär-Kontrollgasleitung (17) stromaufwärts der kalten Seite in die Primärleitung (8) führt.

4. SOEC-System (1) nach einem der voranstehenden Ansprüche,
**dadurch gekennzeichnet, dass**
der Kontrollgaszuführabschnitt (14) eine Sekundär-Kontrollgasleitung (21) zum Leiten des Kontrollgases in den Sekundäreingang (10) aufweist.

5. SOEC-System (1) nach Anspruch 4,
**dadurch gekennzeichnet, dass**
die Sekundär-Kontrollgasleitung (21) zumindest abschnittsweise getrennt von der Rezirkulationsleitung (11) ausgestaltet ist.

6. SOEC-System (1) nach einem der Ansprüche 2 bis 3 und nach einem der Ansprüche 4 bis 5,
**dadurch gekennzeichnet, dass**
die Primär-Kontrollgasleitung (17) und die Sekundär-Kontrollgasleitung (21) zumindest abschnittsweise getrennt voneinander ausgestaltet sind.

7. SOEC-System (1) nach einem der Ansprüche 2 bis 3 und nach einem der Ansprüche 4 bis 6,
**dadurch gekennzeichnet, dass**
die Ventilanordnung ein Primärventil (19) in der Primär-Kontrollgasleitung (17) und ein Sekundärventil (20) in der Sekundär-Kontrollgasleitung (21) aufweist.

8. SOEC-System (1) nach einem der voranstehenden Ansprüche,
**gekennzeichnet durch**
eine Kontrollgasquelle (22) zum Bereitstellen des Kontrollgases in Form von Kohlendioxid.

9. Verfahren zum Betreiben eines SOEC-Systems (1) nach einem der voranstehenden Ansprüche, aufweisend die Schritte:
- Erkennen eines aktuellen Betriebszustandes des SOEC-Systems (1) durch eine Betriebszustandserkennungsvorrichtung (15), und
- Einstellen der Kontrollgaszufuhr in den Primärabschnitt (9) und/oder in den Sekundärabschnitt (13) abhängig vom erkannten Betriebszustand des SOEC-Systems (1) durch einen Controller (16).

10. Verfahren nach Anspruch 9,
**dadurch gekennzeichnet, dass**
bei Erkennen eines Teillastbetriebs des SOEC-Systems (1) ein Kontrollgasmassenstrom zum Primärabschnitt (9) erhöht wird und/oder ein Kontrollgasmassenstrom zum Sekundärabschnitt (13) reduziert wird.

## Claims

1. SOEC system (1) comprising a fuel cell stack (2) with a gas side (3) and an air side (4), wherein in an electrolyser mode the cathode is the gas side (3) and the anode is the air side (4), and an ejector (5) for supplying a process fluid to a gas inlet (6) on the gas side (3), wherein the ejector (5) having a primary inlet (7) for introducing a water-containing primary process fluid through a primary line (8) of the SOEC system (1) into a primary section (9), and a secondary inlet (10) for introducing recirculated secondary recirculated secondary process fluid through a recirculation line (11) of the SOEC system (1) from a gas outlet (12) on the gas side (3) into a secondary section (13) of the ejector (5), **characterised by** a control gas supply section (14) for supplying control gas into the primary section (9) and into the secondary section (13) for controlling a pressure and/or a mass flow in the primary section (9) and in the secondary section (13), wherein the control gas supply section (14) for controlling the pressure and/or the mass flow in the primary section (9) and in the secondary section (13) comprises a valve arrangement (19, 20).

2. SOEC system (1) according to claim 1, **characterised in that** the control gas supply section (14) comprises a primary control gas line (17) for conducting the control gas into the primary inlet (7) and/or into the primary line (8).

3. SOEC system (1) according to claim 2, **characterised in that** a cold side of a heat exchanger (18) is arranged upstream of the ejector (5), through which the primary line (8) extends, wherein the primary control gas line (17) leads upstream of the cold side into the primary line (8).

4. SOEC system (1) according to one of the preceding claims, **characterised in that** the control gas supply section (14) comprises a secondary control gas line (21) for guiding the control gas into the secondary inlet (10).

5. SOEC system (1) according to claim 4, **characterised in that** the secondary control gas line (21) is formed at least in sections separately from the recirculation line (11).

6. SOEC system (1) according to one of claims 2 to 3 and according to one of claims 4 to 5, **characterised in that** the primary control gas line (17) and the secondary control gas line (21) are formed separately from each other, at least in sections.

7. SOEC system (1) according to one of the claims 2 to 3 and according to one of the claims 4 to 6, **characterised in that** the valve arrangement comprises a primary valve (19) in the primary control gas line (17) and a secondary valve (20) in the secondary control gas line (21).

8. SOEC system (1) according to one of the preceding claims, **characterised by** a control gas source (22) for providing the control gas in the form of carbon dioxide.

9. Method for operating an SOEC system (1), in particular an SOEC system (1) according to one of the preceding claims, comprising the steps of
- recognising a current operating state of the SOEC system (1) by an operating state detection device (15), and
- adjusting the control gas supply into the primary section (9) and/or into
the secondary section (13) depending on the recognised operating state of the SOEC system (1) by a controller (16).

10. Method according to claim 9, **characterised in that** when partial load operation of the SOEC system (1) is detected, a control gas mass flow to the primary section (9) is increased and/or a control gas mass flow to the secondary section (13) is reduced.

## Revendications

1. Système SOEC (1) comprenant un empilement de piles à combustible (2) avec un côté de gaz (3) et un côté d'air (4), où en mode électrolyse, la cathode correspond au côté gaz (3) et l'anode correspond au côté air (4), et un éjecteur (5) pour alimenter un fluide de traitement à une entrée de gaz (6) sur le côté gaz (3), l'éjecteur (5) comprend une entrée primaire (7) pour introduire un fluide de traitement à travers une conduite primaire (8) du système SOEC (1) dans une section primaire (9) de l'éjecteur (5), et une entrée secondaire (10) pour l'introduction de fluide de traitement secondaire recyclé à travers un conduit de recirculation (11) du système SOEC (1) à partir d'une sortie de gaz (12) sur le côté gaz (3) dans une section secondaire (13) de l'éjecteur (5), **caractérisé par** une section d'alimentation en gaz de contrôle (14) pour alimenter en gaz de contrôle dans la section primaire (9) et dans la section secondaire (13) afin de contrôler une pression et/ou un débit massique dans la section primaire (9) et dans la section secondaire (13), la section d'alimentation en gaz de contrôle (14) étant destinée à contrôler la pression et/ou le débit massique dans la section primaire (9) et dans la section secondaire (13) présente un dispositif de soupape (19, 20).

2. Système SOEC (1) selon la revendication 1, **caractérisé en ce que** la section d'alimentation en gaz de contrôle (14) comprend un conduit de gaz de contrôle primaire (17) pour diriger du gaz de contrôle dans l'entrée primaire (7) et/ou dans la conduite primaire (8).

3. Système SOEC (1) selon la revendication 2, **caractérisé en ce qu'**en amont de l'éjecteur (5) se trouve un côté froid d'un échangeur de chaleur (18) à travers lequel s'étend la conduite primaire (8), la conduite de gaz de contrôle primaire étant gaz de contrôle (17) en amont du côté froid dans la conduite primaire (8).

4. Système SOEC (1) selon l'une des revendications précédentes, **caractérisé en ce que** la section d'alimentation en gaz de contrôle (14) comprend une conduite de gaz de contrôle secondaire (21) pour gaz de contrôle dans l'entrée secondaire (10).

5. Système SOEC (1) selon la revendication 4, **caractérisé en ce que** la conduite de gaz de contrôle secondaire (21) est séparée au moins par sections de la conduite de recirculation (11).

6. Système SOEC (1) selon l'une des revendications 2 à 3 et selon l'une des revendications 4 à 5, **caractérisé en ce que** la conduite de gaz de contrôle primaire (17) et la conduite de gaz de contrôle secondaire (21) sont au moins partiellement séparées l'une de l'autre.

7. Système SOEC (1) selon l'une des revendications 2 à 3 et selon l'une des revendications 4 à 6, **caractérisé en ce que** l'ensemble de vannes comprend une vanne primaire (19) dans la conduite de gaz de contrôle primaire (17) et une vanne secondaire (20) dans la conduite de gaz de contrôle secondaire (21).

8. Système SOEC (1) selon l'une des revendications précédentes, **caractérisé par** une source de gaz de contrôle (22) pour fournir le gaz de contrôle sous forme de dioxyde de carbone.

9. Procédé d'exploitation d'un système SOEC (1), en particulier d'un système SOEC (1) selon l'une quelconque des revendications précédentes, comprenant les étapes consistant à:
- Détection d'un état de fonctionnement actuel du système SOEC (1) par un dispositif de détection d'état de fonctionnement (15), et
- Réglage de l'alimentation en gaz de contrôle dans la section primaire (9) et/ou la section secondaire (13), en fonction de l'état de fonctionnement détecté du système SOEC (1) par un contrôleur (16).

10. Procédé selon la revendication 9, **caractérisé en ce que** lorsqu'un fonctionnement à charge partielle du système SOEC (1) est détecté, un débit massique de gaz de contrôle vers la section primaire (9) est augmenté et/ou un débit massique de gaz de vers la section secondaire (13) est réduit.
